# EUROPEAN PATENT APPLICATION

(11) **EP 2 012 451 A2**
(43) Date of publication of application: **07.01.2009**
(21) Application number: 08151729.4
(22) Date of filing: 21.02.2008
(51) Int. Cl.: H04H 60/27

(54) **Method for storing data broadcast and video apparatus using the same**

(30) Priority: 04.07.2007 KR 20070067073
(71) Applicant: Samsung Electronics Co., Ltd., Suwon-si, Gyeonggi-do 442-742 (KR)
(72) Inventor: Kim, Mun-seok, 201, One Room, 1039-13, Suwon-si, Gyeonggi-do (KR); Nam, Kyung-chul, 306-504, Cheongmyeong-maeul, Yeongtong-gu, Suwon-si, Gyeonggi-do (KR)
(74) Representative: Clark, David James

(57) **Abstract**

A data broadcast storing method and a video apparatus are provided. The broadcast storing method includes receiving a broadcast signal comprising a video signal, an audio signal, an additional information signal and a data broadcast signal (S600), and storing video corresponding to the data broadcast signal (S650). The video corresponding to the data broadcast signal may be stored and output, so that a user can easily obtain a variety of data.

## Description

### BACKGROUND OF THE INVENTION

### 1. Field of the Invention

Apparatuses and methods consistent with the present invention relate to storing a broadcast, and more particularly, to receiving a data broadcast signal and storing video related to the received signal.

### 2. Description of the Related Art

Data broadcasting enables multiplexing of code signals using television (TV) broadcasting in order to control a recipient's TV or to transmit various types of data. Data broadcasting is additionally performed only when digital broadcasting is received. Digital broadcasting converts broadcast signals such as audio, video or data signals into digital signals, to transmit and receive the converted signals to and from digital transmitting systems.

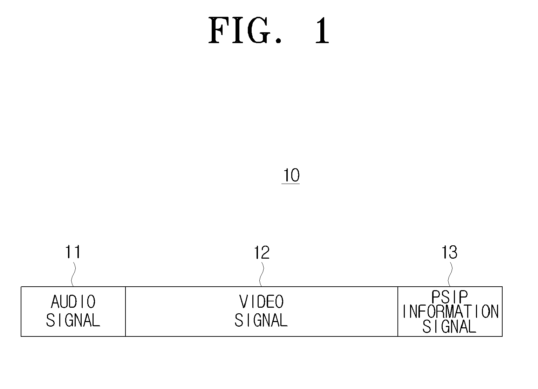

FIG. 1 is a diagram showing the configuration of a transmission signal of a conventional digital broadcast.

A digital broadcast signal 10 comprises an audio signal 11, a video signal 12 and a program and system information protocol (PSIP) information signal 13.

The PSIP is a standard for describing programs and data transmitted from digital TVs and various types of information required for reception of TVs. The PSIP is a set of tables made so that operations may be performed in all transport streams for digital TVs. The PSIP represents information required for virtual channels transmitted over a specific transport stream, to provide information required to receive broadcast signals.

The digital TV receives the audio signal 11 and outputs sounds corresponding to the audio signal 11 via a speaker. The digital TV also receives the video signal 12 and outputs video corresponding to the video signal 12 on a display.

In this situation, if a user pauses video corresponding to a desired video signal, a suspended image may be displayed. Additionally, if the user desires to store the suspended image, the suspended image may be stored in an internal or external medium, and the stored image may be output through an internal or external device.

During digital broadcasting, the user may receive a broadcast signal 10 comprising an audio signal 11, a video signal 12 and a PSIP information signal 13, but if the user pauses the video, only an image corresponding to the video signal 12 may be stored.

### SUMMARY OF THE INVENTION

Exemplary embodiments of the present invention aim to address the above disadvantages and other disadvantages not described above.

According to an aspect of the present invention, there is provided a broadcast storing method comprising receiving a broadcast signal comprising a video signal, an audio signal, an additional information signal and a data broadcast signal; and storing video corresponding to the data broadcast signal.

The video corresponding to the data broadcast signal may comprise a still image captured from video displayed on a display in response to the data broadcast signal.

The video corresponding to the data broadcast signal may be or may not be linked with a broadcast program.

The video corresponding to the data broadcast signal may be stored together with video corresponding to the video signal.

The broadcast storing method may further comprise displaying the video corresponding to the video signal in a first layer, and displaying the video corresponding to the data broadcast signal in a second layer. The storing may comprise storing the video corresponding to the data broadcast signal which is displayed in the second layer.

The additional information signal may comprise a program and service information protocol (PSIP) information signal, and the data broadcast signal may comprise a signal generated by a data broadcast provider.

The data broadcast signal may comprise a signal used to provide at least one of monodirectional data services and bidirectional data services.

The broadcast storing method may further comprise transmitting the stored video corresponding to the data broadcast signal to an external device.

The additional information signal may be processed by an application used to operate an apparatus which receives the broadcast signal, and the data broadcast signal may be processed by an application provided by the data broadcast provider.

According to another aspect of the present invention, there is provided a video apparatus comprising a receiver which receives a broadcast signal comprising a video signal, an audio signal, an additional information signal and a data broadcast signal; and a controller which stores at least one of the data broadcast signal and video corresponding to the data broadcast signal in a storage medium.

The video corresponding to the data broadcast signal may comprise a still image captured from video displayed on a display in response to the data broadcast signal.

The video corresponding to the data broadcast signal may be or may not be linked with a broadcast program.

The video corresponding to the data broadcast signal may be stored together with video corresponding to the video signal.

The video apparatus may further comprise a broadcast processor which displays the video corresponding to the video signal in a first layer, and displays the video corresponding to the data broadcast signal in a second layer. The controller may store the video corresponding to the data broadcast signal which is displayed in the second layer in the storage medium.

The additional information signal may comprise a program and service information protocol (PSIP) information signal, and the data broadcast signal may comprise a signal generated by a data broadcast provider.

The data broadcast signal may comprise a signal used to provide at least one of monodirectional data services and bidirectional data services.

The video apparatus may further comprise an interface unit which transmits the stored data broadcast signal and video corresponding to the data broadcast signal to an external device.

The additional information signal may be processed by an application used to operate an apparatus which receives the broadcast signal, and the data broadcast signal may be processed by an application provided by the data broadcast provider.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram showing the configuration of a transmission signal of a conventional digital broadcast;
FIG. 2 is a block diagram of a digital television (DTV) according to an exemplary embodiment of the present invention;
FIG. 3 is a diagram showing the configuration of a data broadcast signal received according to an exemplary embodiment of the present invention;
FIG. 4 is a flowchart explaining a broadcast storing method according to an exemplary embodiment of the present invention;
FIGS. 5A to 5C are views explaining a process for storing video corresponding to a data broadcast signal, according to an exemplary embodiment of the present invention;
FIG. 6 is a block diagram of a video apparatus according to an exemplary embodiment of the present invention; and
FIG. 7 is a flowchart explaining a broadcast storing method according to an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

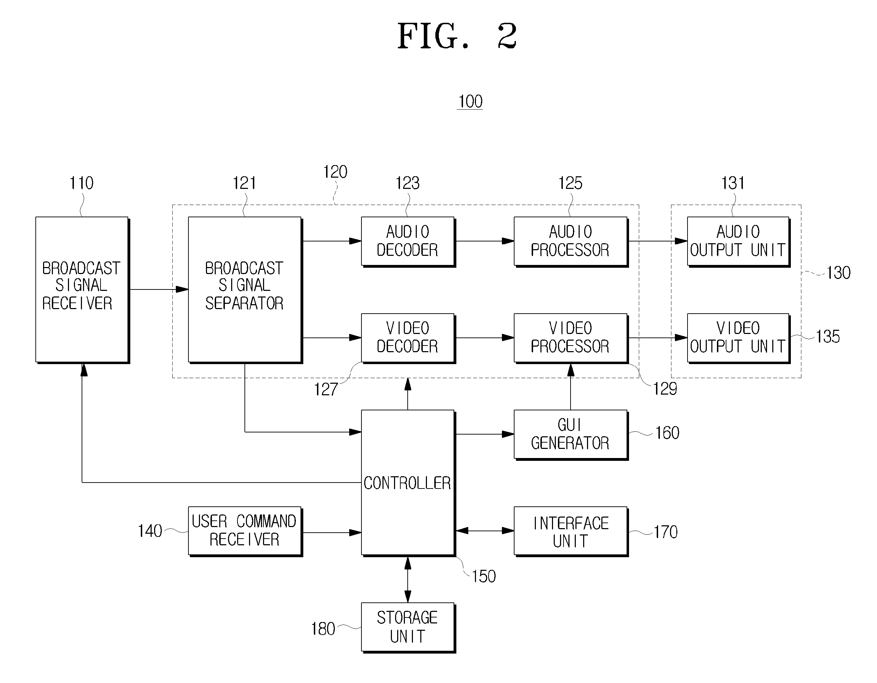

FIG. 2 is a block diagram of a digital television 100 (DTV) according to an exemplary embodiment of the present invention. The DTV 100 according to an exemplary embodiment of the present invention provides a digital broadcast program to be viewed by a user, and provides data broadcasting services to be used by a user. The data broadcasting services comprise monodirectional services and bidirectional services.

As shown in FIG. 2, the DTV 100 according to an exemplary embodiment of the present invention comprises a broadcast signal receiver 110, a broadcast processor 120, a broadcast output unit 130, a user command receiver 140, a controller 150, a graphical user interface (GUI) generator 160, an interface unit 170 and a storage unit 180.

The broadcast signal receiver 110 tunes to one of broadcast signals received wirelessly or via a cable from a data broadcast provider, and demodulates the tuned broadcast signal.

The broadcast processor 120 performs signal processing with respect to the broadcast signal output from the broadcast signal receiver 110. The broadcast processor 120 displays video corresponding to a video signal in a video layer, and video corresponding to a data broadcast signal in a graphic layer.

The broadcast processor 120 comprises a broadcast signal separator 121, an audio decoder 123, an audio processor 125, a video decoder 127 and a video processor 129.

The broadcast signal separator 121 separates the broadcast signal output from the broadcast signal receiver 110 into a video signal, an audio signal, an additional information signal and a data broadcast signal, and outputs the separated signals.

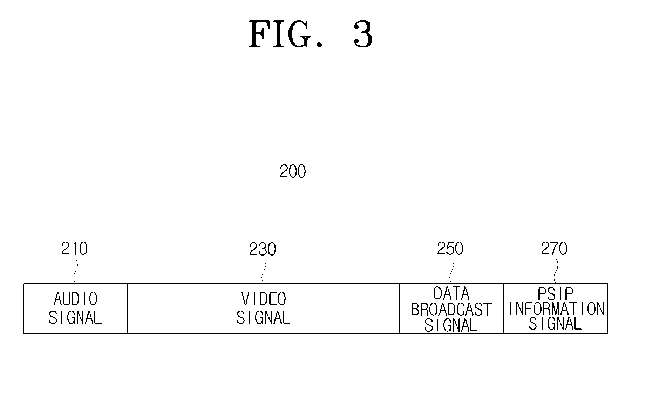

FIG. 3 is a diagram showing the configuration of the received data broadcast signal according to an exemplary embodiment of the present invention. A broadcast signal 200 of the data broadcasting comprises an audio signal 210, a video signal 230, a data broadcast signal 250 and program and system information protocol (PSIP) information signal 270.

The data broadcast signal 250 comprises information such as games, horoscopes, weather reports, traffic reports, stock market information, real estate information, travel information, news, information on shopping and dining out, movie listings, bestseller listings, music listings and sports news, which may be in the form of text, still images, graphics, documents, software or the like. A user may extract a variety of information related to a program from the data broadcast signal 250 while viewing the program, so that it is possible to use the data broadcasting services.

For example, while viewing a sports program, the user may also view previous game results and information on the rankings and the winning strategies of the teams playing, based on information extracted from the data broadcast signal 250.

Referring back to FIG. 2, after the audio signal 210 and the video signal 230 are separated from the broadcast signal, the audio signal 210 and the video signal 230 are decoded by the audio decoder 123 and the video decoder 127, respectively, and then transferred to the audio processor 125 and the video processor 129, respectively, to be used in providing the digital broadcast program.

The additional information signal and the data broadcast signal separated from the broadcast signal are transferred to the controller 150, and then used in providing the data broadcasting services.

The additional information signal may be a PSIP information signal. The data broadcast signal comprises a signal generated by a data broadcast provider, and may comprise an application which enables a user to view the data broadcast. This application is generally provided from the data broadcast provider, and may be used to process the data broadcast signal.

The additional information signal may be processed by an application that has already been programmed in the DTV 100, that is, an application used to operate the DTV 100.

The audio decoder 123 decodes the audio signal output from the broadcast signal separator 121. Accordingly, the audio decoder 123 may output the decoded audio signal.

The audio processor 125 converts the decoded audio signal output from the audio decoder 123 into an audio signal of a format suitable for a speaker.

The video decoder 127 decodes the video signal output from the broadcast signal separator 121, so that the decoded video signal can be output.

The video processor 129 converts the decoded video signal output from the video decoder 127 into a video signal of a format suitable for a display. In doing so, the video processor 129 performs color signal processing and scaling with respect to the decoded video signal.

The GUI generator 160 generates a GUI to be displayed on a display, using the additional information signal and the data broadcast signal which are output from the controller 150. The GUI generated by the GUI generator 160 is transferred to the video processor 129, and is then added to video to be displayed on the display. This operation is referred to as on screen display (OSD) processing.

The GUI generator 160 receives the additional information signal and data broadcast signal from the controller 150, represents the received signals graphically, and transfers the graphics to the video processor 129. The video processor 129 displays the graphics transferred from the GUI generator 160 in the graphic layer.

The broadcast output unit 130 outputs video and audio corresponding to the video signal and the audio signal output from the broadcast processor 120, and provides a user with the video and audio. The broadcast output unit 130 comprises an audio output unit 131 and a video output unit 135.

The audio output unit 131 outputs the audio signal transmitted from the audio processor 125 through a speaker (not shown), or outputs the audio signal to an output display (for example, an external TV) which is connected through an external output terminal (not shown).

The video output unit 135 outputs the video signal transmitted from the video processor 129 through the display, or outputs the video signal to an output display (for example, an external TV) which is connected through an external output terminal (not shown).

The interface unit 170 transfers user's requests to a data broadcast provider via an external communication network, to enable the bidirectional data broadcasting services. Additionally, the interface unit 170 transmits a data broadcast signal stored in the storage unit 180 and video corresponding to the data broadcast signal stored in the storage unit 180 to an external device (not shown).

The storage unit 180 is a storage medium which stores programs to be executed by the controller 150 to provide the data broadcasting services. A memory, a hard disc drive (HDD), or the like may be used as the storage unit 180.

The user command receiver 140 transfers user commands received from a remote controller (not shown) to the controller 150. The controller 150 controls the entire operation of the DTV 100 in response to the user commands from the user command receiver 140.

Specifically, the controller 150 controls the operations of the broadcast signal receiver 110 and the broadcast processor 120, so that digital broadcast programs can be provided to a user. The controller 150 also provides a user with data broadcasting services using the additional information signal and the data broadcasting signal which are transferred from the broadcast signal separator 121.

The controller 150 may store a still image captured from a data broadcast displayed on the display in the storage unit 180. In this situation, the controller 150 may store video corresponding to a data broadcast signal displayed over the graphic layer.

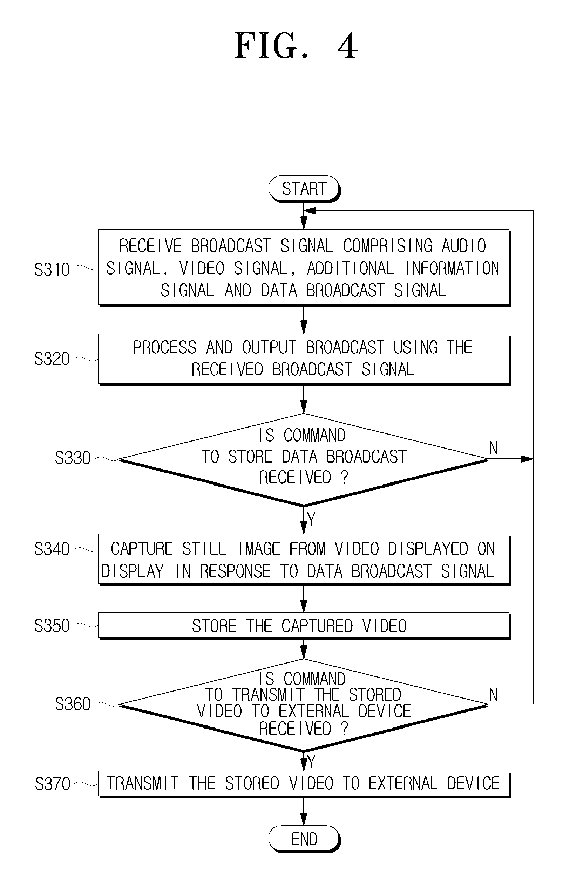

Hereinafter, a process by which the controller 150 controls storage of a video corresponding to the data broadcast signal contained in the broadcast signal will be described in detail with reference to FIG. 4. FIG. 4 is a flowchart explaining a broadcast storing method according to an exemplary embodiment of the present invention.

As shown in FIG. 4, the broadcast signal receiver 110 receives a broadcast signal comprising a video signal, an audio signal, an additional information signal and a data broadcast signal (S310).

If the broadcast signal is received, the broadcast processor 120 may process a broadcast using the received broadcast signal and output the processed broadcast to the broadcast output unit 130 (S320). The operation for processing the video signal, audio signal, additional information signal and data broadcast signal is described above.

If the broadcast is processed and output, the controller 150 may determine whether a command to store a data broadcast is received (S330).

If it is determined that the command to store a data broadcast is received (S330-Y), the controller 150 may capture a video area displayed on a display in response to the data broadcast signal (S340), and may control the captured video to be stored in the storage unit 180 (S350).

The controller 150 may then determine whether a command to transmit the stored video to an external device is received (S360).

If it is determined that the command to transmit the stored video to an external device is received (S360-Y), the controller 150 may transmit the stored video to the external device (S370).

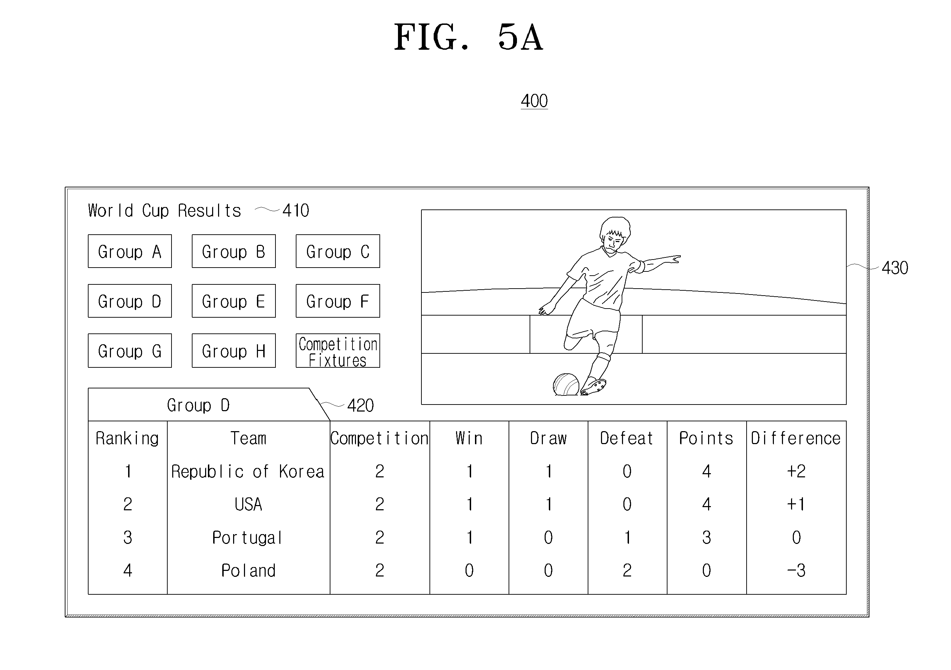

FIGS. 5A to 5C are views explaining a process for storing video corresponding to a data broadcast signal, according to an exemplary embodiment of the present invention.

FIG. 5A shows a screen 400 that may be viewed on the DTV 100. Video 430 corresponding to a video signal is displayed on the upper right of the screen 400. A user may view the video 430 corresponding to the video signal on the full screen 400, or the video 430 may be viewed on a portion of the screen 400 as shown in FIG. 5A. Two videos 410 and 420 corresponding to data broadcast signals are displayed on the remaining portion of the screen 400, excluding the portion on which the video 430 is displayed.

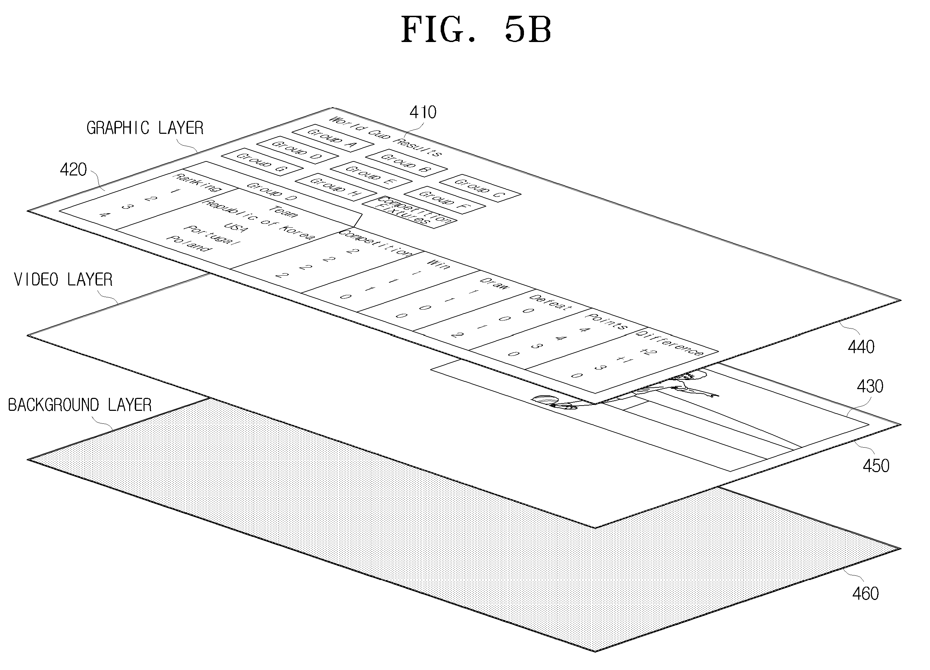

FIG. 5B shows layers of the screen 400. The screen 400 may be separated into a graphic layer 440, a video layer 450 and a background layer 460.

The graphic layer 440 represents data broadcast content, on which the two videos 410 and 420 corresponding to the data broadcast signals are displayed. The content may be displayed in the Java programming language and in a markup language.

The video layer 450 displays general broadcasts, that is, the video 430 corresponding to the video signal.

The background layer 460 displays a background.

As described above, the video 430 corresponding to the video signal, and the videos 410 and 420 corresponding to the data broadcast signals are displayed in separate layers, so it is possible to capture an area of the videos 410 and 420 appearing on the display in response to the data broadcast signal.

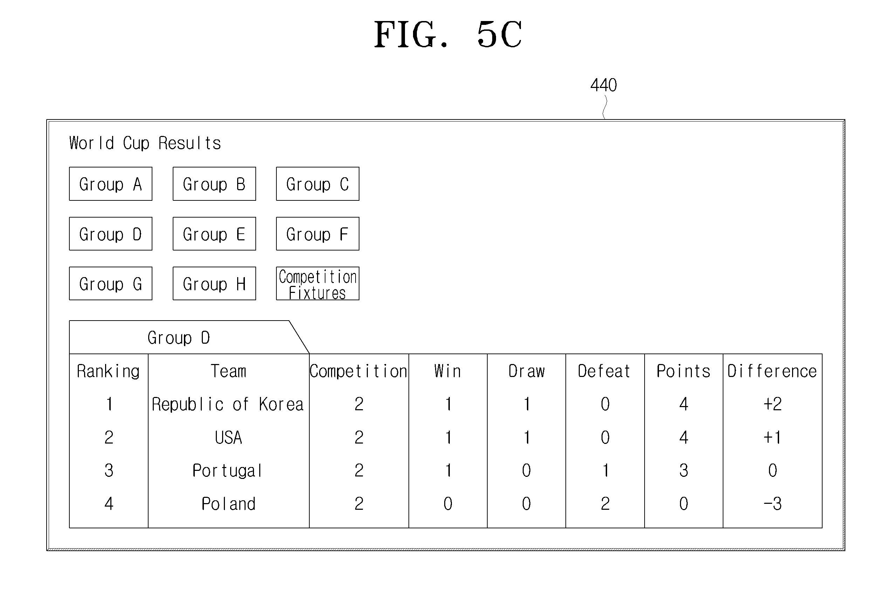

FIG. 5C shows a still image captured from only the videos 410 and 420 corresponding to the data broadcast signals displayed in the graphic layer 440.

Accordingly, a user may capture only the videos 410 and 420 corresponding to the data broadcast signals, and may send the captured videos 410 and 420 to the external device, as described above.

The process for capturing the area of the video corresponding to the data broadcast signal and storing the captured video was described above. However, in the present invention, the videos 410 and 420 corresponding to the data broadcast signals displayed on the graphic layer 440 may also be stored without being captured.

Although the screen 400 output through the DTV 100 is separated into the graphic layer 440, video layer 450 and background layer 460, and the graphic layer 440 is stored in accordance with this exemplary embodiment of the present invention, any layer that can be separated can be stored in addition to the graphic layer 440.

Accordingly, any layer that can be separated, for example picture-in-picture (PIP) or manufacturer OSD, may be selectively stored separately from the layers in which video corresponding to the data broadcast signal is displayed.

Although a data broadcast receiving apparatus to which the present invention is applicable is constituted by the DTV 100 for convenience of understanding, the present invention is applicable to a video system including other broadcast receiving apparatuses. Besides the DTV 100, the broadcast receiving apparatuses may comprise a set-top box (STB), a digital multimedia broadcasting (DMB) device, and various portable devices, such as a mobile phone, a navigation device and a personal multimedia player (PMP), having a broadcast receiving function.

Additionally, when the stored video corresponding to the data broadcast signal is transmitted to the external device, a video receiving apparatus such as a printer, a DTV, a PMP or a mobile phone may be used as an external device. Receiving may be performed using wired and/or wireless technologies such as Bluetooth, a cable or the like.

Although the video 430 corresponding to the video signal is displayed on the upper right of the screen 400 in the exemplary embodiment of the present invention, the video 430 may appear on the upper left, lower left or lower right of the screen 400.

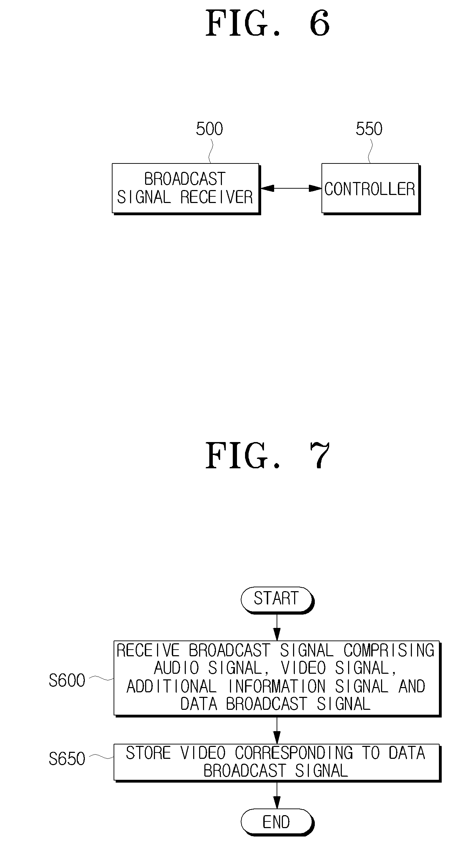

FIG. 6 is a block diagram of a video apparatus according to an exemplary embodiment of the present invention.

The video apparatus of FIG. 6 comprises a broadcast signal receiver 500 and a controller 550.

The broadcast signal receiver 500 receives a broadcast signal comprising a video signal, an audio signal, an additional information signal and a data broadcast signal.

The controller 550 stores either the data broadcast signal or video corresponding to the data broadcast signal.

FIG. 7 is a flowchart explaining a broadcast storing method according to tan exemplary embodiment of the present invention.

The video apparatus receives the broadcast signal comprising the video signal, the audio signal, the additional information signal and the data broadcast signal (S600). The video apparatus then stores either the data broadcast signal or the video corresponding to the data broadcast signal (S650).

Therefore, the video represented by the data broadcast signal contained in the broadcast signal may be stored.

As described above, according to the exemplary embodiments of the present invention, not only video corresponding to a video signal but also video corresponding to a data broadcast signal may be stored and output when various types of information are provided by data broadcasting, so that a user can possess information and easily acquire various types of data.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast storing method comprising:
receiving a broadcast signal comprising a video signal, an audio signal, an additional information signal and a data broadcast signal (S600); and
storing video corresponding to the data broadcast signal (S650).

2. The broadcast storing method as claimed in claim 1, wherein the video corresponding to the data broadcast signal comprises a still image captured from video displayed on a display in response to the data broadcast signal.

3. The broadcast storing method as claimed in claim 1 or 2, wherein the video corresponding to the data broadcast signal is linked with a broadcast program.

4. The broadcast storing method as claimed in claim 1, or 2 wherein the video corresponding to the data broadcast signal is not linked with a broadcast program.

5. The broadcast storing method as claimed in claim 3, wherein the video corresponding to the data broadcast signal is stored together with video corresponding to the video signal.

6. The broadcast storing method as claimed in any preceding claim, further comprising displaying the video corresponding to the video signal in a first layer, and displaying the video corresponding to the data broadcast signal in a second layer,
wherein the storing comprises storing the video corresponding to the data broadcast signal which is displayed in the second layer.

7. The broadcast storing method as claimed in any preceding claim, wherein the additional information signal comprises a program and service information protocol (PSIP) information signal, and
the data broadcast signal comprises a signal generated by a data broadcast provider.

8. The broadcast storing method as claimed in any preceding claim, wherein the data broadcast signal comprises a signal used to provide at least one of monodirectional data services and bidirectional data services.

9. The broadcast storing method as claimed in any preceding claim, further comprising transmitting the stored video corresponding to the data broadcast signal to an external device.

10. The broadcast storing method as claimed in any preceding claim, wherein the additional information signal is processed by an application used to operate an apparatus which receives the broadcast signal, and
the data broadcast signal is processed by an application provided by the data broadcast provider.

11. A video apparatus comprising:
a receiver which receives a broadcast signal comprising a video signal, an audio signal, an additional information signal and a data broadcast signal (500); and
a controller (550) which stores at least one of the data broadcast signal and video corresponding to the data broadcast signal in a storage medium (180).

12. The video apparatus as claimed in claim 11, wherein the video corresponding to the data broadcast signal comprises a still image captured from video displayed on a display in response to the data broadcast signal.

13. The video apparatus as claimed in claim 11 or 12, wherein the video corresponding to the data broadcast signal is linked with a broadcast program.

14. The video apparatus as claimed in claim 11 or 12, wherein the video corresponding to the data broadcast signal is not linked with a broadcast program.

15. The video apparatus as claimed in claim 13, wherein the video corresponding to the data broadcast signal is stored together with video corresponding to the video signal.

16. The video apparatus as claimed in any one of claims 11-15, further comprising a broadcast processor (120) which displays the video corresponding to the video signal in a first layer, and displays the video corresponding to the data broadcast signal in a second layer,
wherein the controller (550) stores in the storage medium (180) the video corresponding to the data broadcast signal which is displayed in the second layer.

17. The video apparatus as claimed in any one of claims 11-16, wherein the additional information signal comprises a program and service information protocol (PSIP) information signal, and
the data broadcast signal comprises a signal generated by a data broadcast provider.

18. The video apparatus as claimed in any one of claims 11-17, wherein the data broadcast signal comprises a signal used to provide at least one of monodirectional data services and bidirectional data services.

19. The video apparatus as claimed in any one of claims 11-18, further comprising an interface unit (170) which transmits the stored data broadcast signal and video corresponding to the data broadcast signal to an external device.

20. The video apparatus as claimed in any one of claims 11-19, wherein the additional information signal is processed by an application used to operate an apparatus which receives the broadcast signal, and
the data broadcast signal is processed by an application provided by the data broadcast provider.
